# EUROPEAN PATENT APPLICATION

(11) **EP 4 730 911 A1**
(43) Date of publication of application: **22.04.2026**
(21) Application number: 24823466.8
(22) Date of filing: 14.06.2024
(51) Int. Cl.: H04W 88/12, H04W 24/02, H04W 28/18, H04W 92/12

(54) **CONTROL SYSTEM, CONTROL DEVICE, CONTROL UNIT, AND PROGRAM**

(30) Priority: 16.06.2023 JP 2023098844
(71) Applicant: Softbank Corp., Tokyo 105-7529 (JP)
(72) Inventor: KAWAI Yuto, Tokyo 105-7529 (JP)
(74) Representative: Dilg, Haeusler, Schindelmann Patentanwaltsgesellschaft mbH
(86) International application number: PCT/JP2024/021661
(87) International publication number: WO 2024/257853

(57) **Abstract**

Provided is a control system including: a control device which controls a plurality of base stations arranged in a RAN; and a control unit which is mounted on one base station among the plurality of base stations and which controls the one base station, wherein the control device includes a prediction unit which predicts a state of the RAN at a prediction timing after elapse of a transmission time from a generation start timing at which generation of a control message for controlling the one base station is started until data arrives at the one base station from the control device, a generation unit which generates the control message based on the state of the RAN predicted, and a transmission unit which transmits the control message to the one base station, and wherein the control unit includes a reception unit which receives the control message from the control device, an acquisition unit which acquires a state of the RAN at a reception timing at which the reception unit receives the control message, and a processing unit which executes processing related to control of the one base station based on the control message and the state of the RAN acquired by the acquisition unit.

## Description

### BACKGROUND

### 1. TECHNICAL FIELD

The present invention relates to a control system, a control device, a control unit, and a program.

### 2. RELATED ART

Patent Document 1 describes a base station function arrangement control device which appropriately controls execution of base station function arrangement in a Radio Access Network (RAN) based on Open Radio Access Network (O-RAN) specifications.

### RELATED ART DOCUMENT

### PATENT DOCUMENT

Patent Document 1: Japanese Patent Application Publication No. 2022-165659

### GENERAL DISCLOSURE

An embodiment of the present invention provides a control system. The control system may include a control device which controls a plurality of base stations arranged in a RAN. The control system may include a control unit which is mounted on one base station among the plurality of base stations and which controls the one base station. The control device may include: a prediction unit which predicts a state of the RAN at a prediction timing after elapse of a transmission time from a generation start timing at which generation of a control message for controlling the one base station is started until data arrives at the one base station from the control device; a generation unit which generates the control message based on the state of the RAN predicted by the prediction unit; and a transmission unit which transmits the control message to the one base station. The control unit may include a reception unit which receives the control message from the control device, an acquisition unit which acquires a state of the RAN at a reception timing at which the reception unit receives the control message, and a processing unit which executes processing related to control of the one base station based on the control message and the state of the RAN acquired by the acquisition unit.

In the control system, the processing unit may determine whether or not the control message matches the state of the RAN acquired by the acquisition unit and, when the processing unit determines that the control message matches the state of the RAN acquired by the acquisition unit, execute processing of controlling the one base station in accordance with the control message.

In any of the control systems, when the processing unit determines that the control message does not match the state of the RAN acquired by the acquisition unit, the processing unit may decide a control content for the one base station so as to match the state of the RAN acquired by the acquisition unit and execute processing of controlling the one base station in accordance with a control content decided.

In any of the control systems, when the processing unit determined that the control message does not match the state of the RAN acquired by the acquisition unit, the processing unit may modify the control message so as to match the state of the RAN acquired by the acquisition unit and execute processing of controlling the one base station in accordance with the control message modified. In any of the control systems, the processing unit may modify the control message such that no problem will occur with a function of the RAN. In any of the control systems, the processing unit may modify the control message such that there will be no communication terminal for which QoS cannot be ensured. In any of the control systems, the processing unit may modify the control message such that a spectral efficiency of the RAN will not fall below an allowed lower limit value. In any of the control systems, the processing unit may modify the control message such that no network congestion will occur in the RAN. In any of the control systems, the processing unit may modify the control message such that no interference will occur between a beam output by an antenna mounted on the one base station and another beam. In any of the control systems, the processing unit may modify the control message such that processing load of the one base station does not exceed an upper limit value. In any of the control systems, the processing unit may modify the control message such that a function of the RAN will not fail. In any of the control systems, the processing unit may modify the control message such that a wireless communication connection will not be disconnected between more communication terminals than a predetermined number and the one base station. In any of the control systems, the processing unit may modify the control message such that a ratio of communication terminals for which a wireless communication connection to the one base station is disconnected to a total number of communication terminals in a wireless communication area formed by the one base station will not be higher than a predetermined ratio. In any of the control systems, the processing unit may modify the control message such that a processor or a memory mounted on the one base station will not go into thermal runaway.

In any of the control systems, the processing unit may determine whether or not the control message matches the state of the RAN acquired by the acquisition unit by determining whether or not a problem will occur with a function of the RAN if the processing unit executes processing of controlling the one base station in accordance with the control message in the state of the RAN acquired by the acquisition unit. In any of the control systems, when the processing unit determines that there will be a communication terminal for which QoS cannot be ensured if the one base station is controlled in accordance with the control message, the processing unit may determine a problem will occur with a function of the RAN. In any of the control systems, when the processing unit determines that a spectral efficiency of the RAN will fall below an allowed lower limit value if the one base station is controlled in accordance with the control message, the processing unit may determine a problem will occur with a function of the RAN. In any of the control systems, when the processing unit determines that network congestion will occur in the RAN if the one base station is controlled in accordance with the control message, the processing unit may determine a problem will occur with a function of the RAN. In any of the control systems, when the processing unit determines that an interference will occur between a beam output by an antenna mounted on the one base station and another beam if the one base station is controlled in accordance with the control message, the processing unit may determine a problem will occur with a function of the RAN. In any of the control systems, when the processing unit determines that processing load of the one base station will exceed an upper limit value if the one base station is controlled in accordance with the control message, the processing unit may determine a problem will occur with a function of the RAN. In any of the control systems, when the processing unit determines that a function of the RAN will fail if the one base station is controlled in accordance with the control message, the processing unit may determine a problem will occur with a function of the RAN. In any of the control systems, when the processing unit determines that a wireless communication connection will be disconnected between more communication terminals than a predetermined number and the one base station if the one base station is controlled in accordance with the control message, the processing unit may determine that a function of the RAN will fail. In any of the control systems, when the processing unit determines that a ratio of communication terminals for which a wireless communication connection to the one base station is disconnected to a total number of communication terminals in a wireless communication area formed by the one base station will be higher than a predetermined ratio if the one base station is controlled in accordance with the control message, the processing unit may determine that a function of the RAN will fail. In any of the control systems, when the processing unit determines that a processor or a memory mounted on the one base station will go into thermal runaway if the one base station is controlled in accordance with the control message, the processing unit may determine that a function of the RAN will fail.

In any of the control systems, the generation unit may generate the control message including a prediction result obtained by the prediction unit predicting the state of the RAN and the processing unit may determine whether or not the control message matches the state of the RAN acquired by the acquisition unit by collating the state of the RAN indicated by the prediction result included in the control message and the state of the RAN acquired by the acquisition unit. In any of the control systems, the prediction unit may predict a state of the RAN including a state of a total traffic volume as a sum of traffic volumes of each communication between the one base station and each of a plurality of communication terminals and, when a total traffic volume error between the total traffic volume predicted by the prediction unit and a total traffic volume included in the state of the RAN acquired by the acquisition unit is smaller than a predetermined total traffic volume error threshold, the processing unit may determine that the control message matches the state of the RAN acquired by the acquisition unit and, when the total traffic volume error is larger than the total traffic volume error threshold, the processing unit may determine that the control message does not match the state of the RAN acquired by the acquisition unit. In any of the control systems, the prediction unit may predict a state of the RAN including a state of an average traffic volume as an average of traffic volumes of each communication between the one base station and each of a plurality of communication terminals and, when an average traffic volume error between the average traffic volume predicted by the prediction unit and an average traffic volume included in the state of the RAN acquired by the acquisition unit is smaller than a predetermined average traffic volume error threshold, the processing unit may determine that the control message matches a state of the RAN acquired by the acquisition unit and, when the average traffic volume error is larger than the average traffic volume error threshold, the processing unit may determine that the control message does not match the state of the RAN acquired by the acquisition unit. In any of the control systems, the prediction unit may predict a state of the RAN including a state of a utilization of a processor mounted on the one base station and, when a processor utilization error between the utilization of the processor predicted by the prediction unit and a utilization of the processor included in the state of the RAN acquired by the acquisition unit is smaller than a predetermined processor utilization error threshold, the processing unit may determine that the control message matches the state of the RAN acquired by the acquisition unit and, when the processor utilization error is larger than the processor utilization error threshold, the processing unit may determine that the control message does not match the state of the RAN acquired by the acquisition unit. In any of the control systems, the prediction unit may predict a state of the RAN including a state of a utilization of a memory mounted on the one base station and, when a memory utilization error between the utilization of the memory predicted by the prediction unit and a utilization of the memory acquired by the acquisition unit is smaller than a predetermined memory utilization error threshold, the processing unit may determine that the control message matches the state of the RAN acquired by the acquisition unit and, when the memory utilization error is larger than the memory utilization error threshold, the processing unit may determine that the control message does not match the state of the RAN acquired by the acquisition unit.

In any of the control systems, the generation unit may generate the control message including radio resource information indicating a radio resource to be allocated to a communication terminal in a wireless communication area formed by the one base station and the processing unit may determine whether or not the control message matches the state of the RAN acquired by the acquisition unit by determining whether or not processing of allocating the radio resource indicated by the radio resource information included in the control message to the communication terminal matches the state of the RAN acquired by the acquisition unit. In any of the control systems, the generation unit may generate a control message including antenna control information for controlling an antenna mounted on the one base station and the processing unit may determine whether or not the control message matches the state of the RAN acquired by the acquisition unit by determining whether or not processing of beamforming by using the antenna mounted on the one base station in accordance with the antenna control information included in the control message matches the state of the RAN acquired by the acquisition unit.

Any of the control systems may further include a learning data storage unit which stores learning data including RAN state information indicating a state of the RAN acquired by the information acquisition unit at a reference timing and a plurality of pieces of RAN state information acquired by the information acquisition unit where an elapsed time until the reference timing is shorter than a predetermined elapsed time and
a model generation unit which generates, by machine learning, an estimation model for estimating a state of the RAN at the prediction timing from the plurality of pieces of RAN state information acquired by the information acquisition unit where the elapsed time period until a prediction timing is shorter than the predetermined elapsed time by using, as training data, a plurality of the learning data stored in the learning data storage unit and the prediction unit may predict the state of the RAN at the prediction timing from the plurality of pieces of RAN state information acquired by the information acquisition unit where an elapsed time period until the prediction timing is shorter than the predetermined elapsed time by using the estimation model generated by the model generation unit.

An embodiment of the present invention provides a control device which controls a plurality of base stations arranged in the RAN. The control device may include a prediction unit which predicts a state of the RAN at a prediction timing after elapse of a transmission time from a generation start timing at which generation of a control message for controlling one base station among the plurality of base stations is started until data arrives at the one base station from the control device. The control device may include a generation unit which generates the control message based on the state of the RAN predicted by the prediction unit. The control device may include a transmission unit which transmits the control message to the one base station.

An embodiment of the present invention provides a program for causing a computer to function as the control device.

An embodiment of the present invention provides a control unit which is mounted on one base station among a plurality of base stations arranged in a RAN and which controls the one base station. The control unit may include a reception unit which receives a control message for controlling the one base station from a control device which controls the plurality of base stations, wherein the control message is generated based on a state of the RAN predicted by the control device at a prediction timing after elapse of a transmission time from a generation start timing at which the control device starts generation of the control message until data arrives at the one base station from the control device. The control unit may include an acquisition unit which acquires a state of the RAN at a reception timing at which the reception unit receives the control message. The control unit may include a processing unit which executes processing related to control of the one base station based on the control message and the state of the RAN acquired by the acquisition unit.

In the control unit, the processing unit may determine whether or not the control message matches the state of the RAN acquired by the acquisition unit and, when the processing unit determines that the control message matches the state of the RAN acquired by the acquisition unit, execute processing of controlling the one base station in accordance with the control message.

An embodiment of the present invention provides a program which causes a computer to function as the control unit.

The summary clause above does not list all necessary features of the present invention. The present invention may also be a sub-combination of the features described above.

### BRIEF DESCRIPTION OF THE DRAWINGS

Fig. 1 schematically illustrates an example of a system 10.
Fig. 2 is an explanatory diagram for explaining an example of a case where a system 12 of a related art controls a RAN.
Fig. 3 is an explanatory diagram for explaining an example of a case where a system 14 of the related art controls the RAN.
Fig. 4 is an explanatory diagram for explaining an example of a case where a system 16 of the related art controls the RAN.
Fig. 5 is an explanatory diagram for explaining an example of a case where a system 18 controls the RAN.
Fig. 6 is an explanatory diagram for explaining an example of a case where the system 10 controls the RAN.
Fig. 7 schematically illustrates an example of a functional configuration of a control device 100.
Fig. 8 schematically illustrates an example of a functional configuration of a control unit 42.
Fig. 9 is an explanatory diagram for explaining an example of a processing flow of the system 10.
Fig. 10 schematically illustrates an example of a hardware configuration of a computer 1200 which functions as the control device 100 or the control unit 42.

### DESCRIPTION OF EXEMPLARY EMBODIMENTS

It is desirable that a RAN can be reliably controlled in real time (RT) from a central element separated from the RAN. According to the system according to the present embodiment, for example, a control device as a central element separated from the RAN predicts a situation of the RAN at an arrival time after elapse of a necessary transmission delay time from a current time until data transmitted by the control device arrives at a next generation NodeB (gNB) as a distributed element by executing a Near-RT RIC Application (xApp) for analyzing and controlling various types of information on a framework of a Near-RT RAN Intelligent Controller (RIC), generates a control message based on a prediction result, and transmits the control message generated to the gNB. Then, by executing a decentralized Application (dApp) using a mechanism of distributed computing, the gNB judges whether or not the control message received from the control device matches a situation of the RAN at a reception time of the control message and controls various functions of the gNB by adjusting the control message as needed based on a judgement result.

Hereinafter, the present invention will be described through embodiments of the invention, but the following embodiments do not limit the invention according to claims. In addition, not all of the combinations of features described in the embodiments are essential to the solving means of the invention.

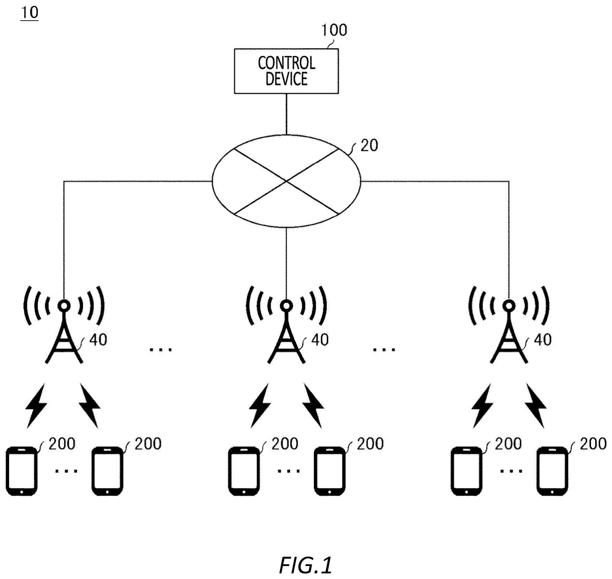

Fig. 1 schematically illustrates an example of a system 10. The system 10 may include a control device 100. The system 10 may include a plurality of base stations 40.

The control device 100 controls a base station 40 arranged in a RAN. The control device 100 controls, for example, a plurality of base stations 40 arranged in the RAN.

The control device 100 controls the base station 40, for example, by controlling a radio resource to be allocated to a communication terminal 200 in a wireless communication area formed by the base station 40. The control device 100 controls the base station 40, for example, by controlling a beam output by an antenna mounted on the base station 40 for forming the wireless communication area. A plurality of antennas may be mounted on the base station 40.

The control device 100 controls the base station 40, for example, by transmitting information for controlling various functions of the base station 40 to the base station 40 to be controlled. The control device 100 transmits the information to the base station 40, for example, through a core network 20. The base station 40 may control various functions based on the information received from the control device 100.

The core network 20 is compliant with, for example, a 5th Generation (5G) communication system. The core network 20 may be compliant with a mobile communication system of a 6th Generation (6G) communication system onwards. The core network 20 may be compliant with a 3rd Generation (3G) communication system or a Long Term Evolution (LTE) communication system. Mainly described herein is a case where the core network 20 is compliant with the 5G communication system.

For example, the RAN is an O-RAN. The O-RAN is a RAN in which interconnection between devices of different vendors is enabled through an interface defined in a standard specification. The standard specification of the interface of the O-RAN is, for example, defined by O-RAN Alliance.

The control device 100 corresponds, for example, to the Near-RT-RIC among RICs that perform optimization of a radio resource of the RAN or automation of a RAN operation. As for the RICs, a Non-RT-RIC may be included besides the Near-RT-RIC.

The control device 100 controls, for example, the RAN. The control device 100 controls the RAN, for example, by controlling at least one base station 40 among the plurality of base stations 40 arranged in the RAN.

The control device 100 controls the RAN, for example, based on a state of the RAN. The state of the RAN may include respective states of the plurality of base stations 40 arranged in the RAN. Thus, it can be said that a state of one base station 40 among the plurality of base stations 40 arranged in the RAN is a local state of the RAN.

The communication terminal 200 may be any communication terminal as long as it is capable of wireless communication with the base station 40. For example, the communication terminal 200 is a mobile phone such as a smartphone. The communication terminal 200 may be a tablet terminal and a Personal Computer (PC). The communication terminal 200 may be a so-called Internet of Things (IoT) device. The communication terminal 200 can include anything encompassed by so-called Internet of Everything (IoE).

Four requirements below are major requirements which determine performance of control of the RAN. A first requirement is that an element separated from the RAN can control the RAN, i.e., separation. This requirement of separation may be referred to as "Requirement 1". A second requirement is that a single entity can control an entirety of the RAN, i.e., centralization. This requirement of centralization may be referred to as "Requirement 2". A third requirement is that the RAN can be controlled in real time, i.e., real-time property. This requirement of real-time property may be referred to as "Requirement 3". A fourth requirement is that the RAN can be controlled in a way that matches the state of the RAN, i.e., high reliability. This requirement of high reliability may be referred to as "Requirement 4".

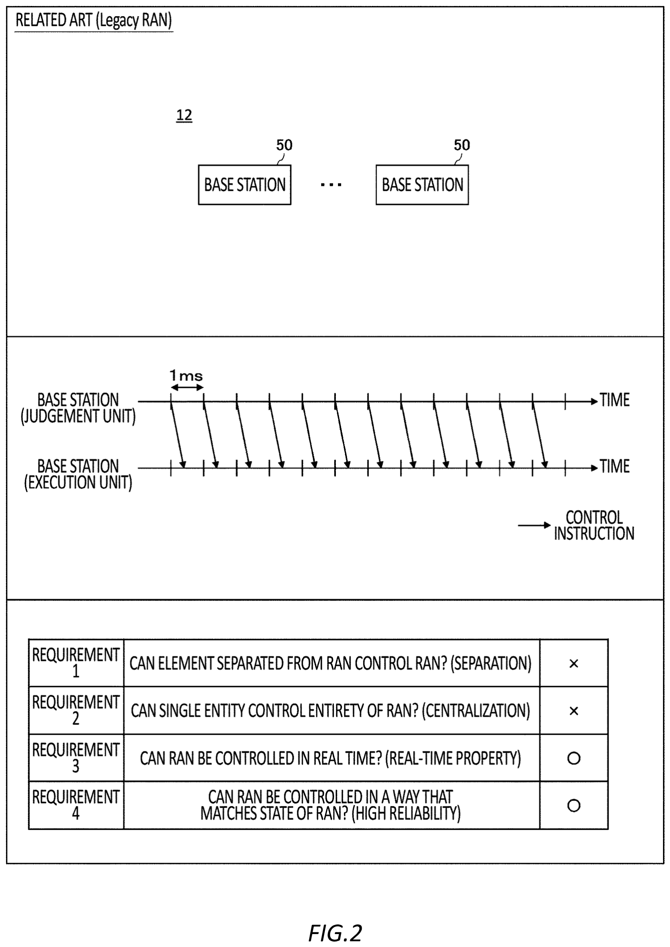

Mainly described here by using Fig. 2 to Fig. 6 is (1) a configuration of each system, (2) a temporal flow when the RAN is controlled in each system, and (3) whether or not each of Requirement 1 to Requirement 4 is satisfied when the RAN is controlled in each system.

Fig. 2 is an explanatory diagram for explaining an example of a case where a system 12 of a related art controls the RAN. As shown in Fig. 2, the system 12 includes a plurality of base stations 50.

The base station 50 includes a judgement unit which judges a control content for controlling various functions of the own station and an execution unit which executes control of the various functions of the base station 50. The judgement unit judges the control content based on a state of the base station 50. The judgement unit and the execution unit are features incorporated in the base station 50 in advance.

As shown in Fig. 2, the judgement unit judges the control content at a time interval of about 1 ms and transmits a control instruction indicating the control content to the execution unit. The execution unit executes control of the various functions of the base station 50 in accordance with the control content indicated by the control instruction received from the judgement unit.

According to the system 12, the judgement unit controls the RAN by causing the execution unit to control the base station 50 by transmitting the control instruction which can be transmitted at the time interval of about 1 ms to the execution unit. Thus, the system 12 satisfies Requirement 3 because each base station 50 can judge the control content at the time interval about 1 ms.

According to the system 12, each base station 50 controls the RAN by executing control of the various functions by judging the control content based on a state of itself. Thus, the system 12 satisfies Requirement 4 because each base station 50 can control itself so as to match the state of itself.

However, according to the system 12, the RAN can be controlled only by each base station 50 arranged in the RAN. Thus, the system 12 does not satisfy Requirement 1 because an element separated from the RAN cannot control the RAN.

According to the system 12, each base station 50 as a distributed element controls the RAN by controlling itself. Thus, the system 12 does not satisfy Requirement 2 because a single entity cannot control the entirety of the RAN.

As a result of above, the system 12 satisfies Requirement 3 and Requirement 4, but does not satisfy Requirement 1 and Requirement 2. Further, the system 12 does not have customizability for control of the RAN because the judgement unit and the execution unit of the base station 50 are features incorporated in the base station 50 in advance. Refer to Fig. 2, which shows a table summarizing whether or not the system 12 satisfies each requirement of Requirement 1 to Requirement 4.

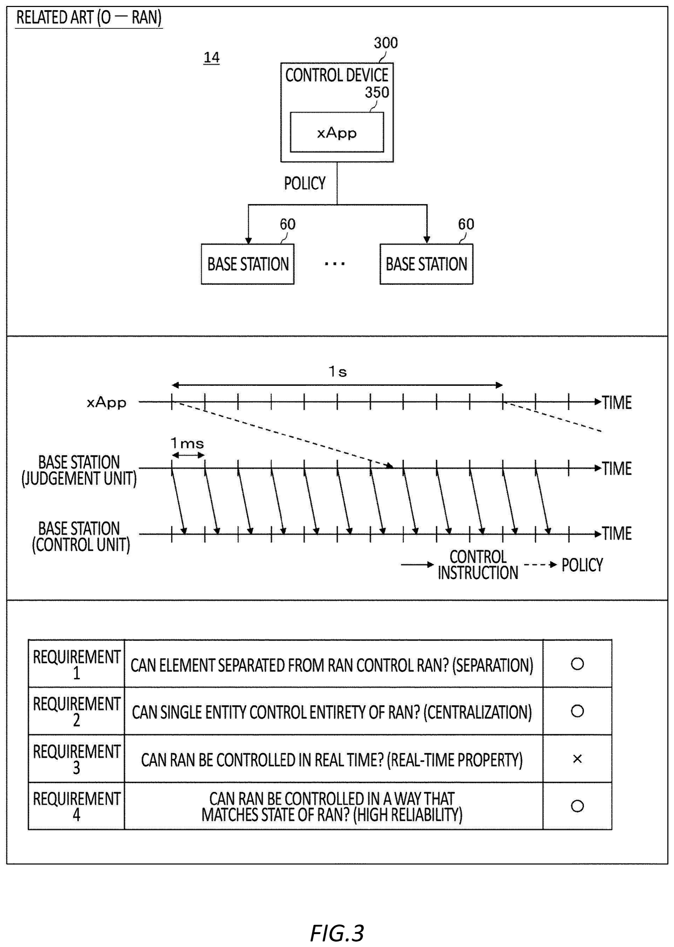

Fig. 3 is an explanatory diagram for explaining an example of a case where a system 14 of the related art controls the RAN. As shown in Fig. 3, the system 14 includes a control device 300 and a plurality of base stations 60.

The control device 300 executes various functions by executing an xApp 350. For example, the control device 300 generates a policy about control of the RAN based on a state of the RAN.

The base station 60 includes a judgement unit which judges a control content for controlling various functions of the base station 60 and an execution unit which executes control of various functions of the base station 60. The judgement unit judges the control content based on the state of the base station 60 in accordance with the policy received from the control device 300. The judgement unit and the execution unit are features incorporated in the base station 60 in advance.

As shown in Fig. 3, the control device 300 generates a policy at a time interval of about 1 s and transmits the policy generated to the base station 60, by executing the xApp 350. The judgement unit judges the control content at a time interval of about 1 ms in accordance with the policy received from the control device 300 and transmits a control instruction indicating the control content to the execution unit. The execution unit executes control of the various functions of the base station 60 in accordance with the control content indicated by the control instruction received from the judgement unit.

According to the system 14, the control device 300 controls the RAN by causing each base station 60 arranged in the RAN to control itself in accordance with the policy. Thus, the system 14 satisfies Requirement 1 because the control device 300 as an element separated from the RAN can control the RAN.

According to the system 14, the control device 300 as a central element controls the RAN by causing each base station 60 as a distributed element to control itself in accordance with the policy. Thus, the system 14 satisfies Requirement 2 because the control device 300 as a single entity can control the entirety of the RAN.

According to the system 14, the control device 300 controls the RAN by causing each base station 60 to control itself based on the state of itself in accordance with the policy. Thus, the system 14 satisfies Requirement 4 because the control device 300 can cause each base station 60 to control itself so as to match the state of each base station 60.

However, according to the system 14, the control device 300 controls the RAN by causing the base station 60 to control itself by transmitting a policy that can be transmitted at the time interval of about 1 s to the base station 60. Thus, the system 14 does not satisfy Requirement 3 because the control device 300 can generate a policy only at the time interval of about 1 s.

As a result of above, the system 14 satisfies requirements of Requirement 1, Requirement 2, and Requirement 4, but does not satisfy Requirement 3. Refer to Fig. 3, which shows a table summarizing whether or not the system 14 satisfies each requirement of Requirement 1 to Requirement 4.

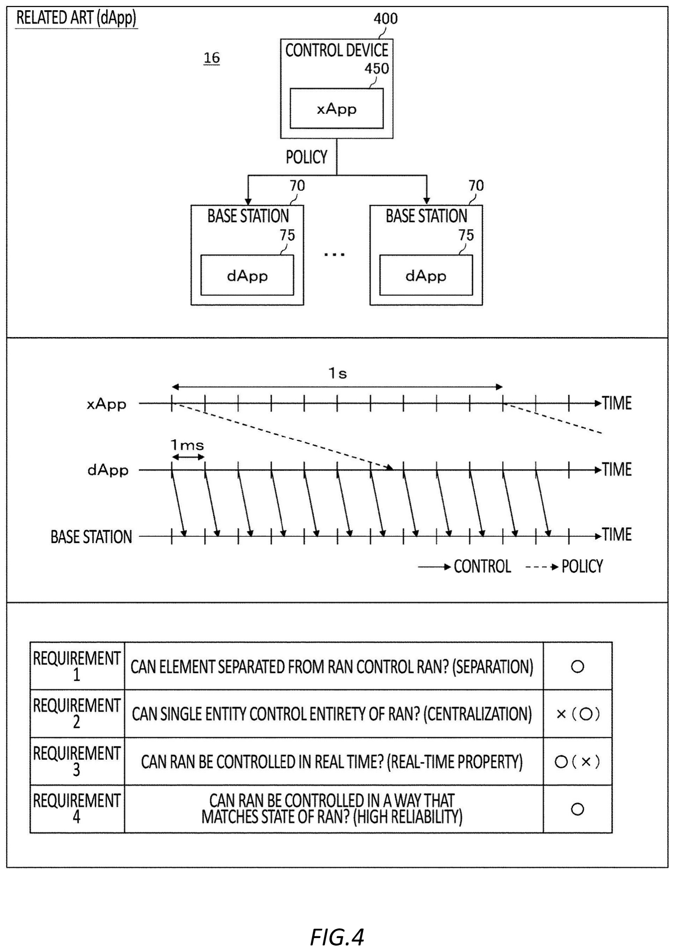

Fig. 4 is an explanatory diagram for explaining an example of a case where a system 16 of the related art controls the RAN. As shown in Fig. 4, the system 16 includes a control device 400 and a plurality of base stations 70.

The control device 400 may execute various functions by executing an xApp 450. For example, the control device 400 generates a policy about control of the RAN based on a state of the RAN.

The base station 70 executes various functions by executing a dApp 75. For example, the base station 70 controls itself by judging a control content for controlling the various functions of itself based on a state of itself in accordance with the policy received from the control device 400.

As shown in Fig. 4, the control device 400 generates a policy at a time interval of about 1 s and transmits the policy generated to the base station 70, by executing the xApp 450. The base station 70 controls itself by judging the control content at a time interval of about 1 ms in accordance with the policy received from the control device 400 by executing the dApp 75.

According to the system 16, the control device 400 controls the RAN by causing each base station 70 arranged in the RAN to control itself in accordance with the policy. Thus, the system 16 satisfies Requirement 1 because the control device 400 as an element separated from the RAN can control the RAN.

According to the system 16, the control device 400 controls the RAN by causing each base station 70 to control itself based on the state of itself in accordance with the policy. Thus, the system 16 satisfies Requirement 4 because the control device 400 can cause each base station 70 to control itself so as to match the state of each base station 70.

Described now is whether or not the system 16 satisfies Requirement 2 and Requirement 3 in two cases, i.e., a case from a perspective of the base station 60 and a case from a perspective of the control device 400. Described first is whether or not the system 16 satisfies Requirement 2 and Requirement 3 from a perspective of the base station 60 .

Each base station 70 controls the RAN by controlling itself by judging the control content at a time interval about 1 ms in accordance with the policy received from the control device 400. Thus, the system 16 satisfies Requirement 3 because each base station 70 can judge the control content at the time interval about 1 ms.

Each base station 70 as a distributed element controls the RAN by controlling itself in accordance with the policy received from the control device 400. Thus, the system 16 does not satisfy Requirement 2 because a single entity cannot control the entirety of the RAN.

Described next is whether or not the system 16 satisfies Requirement 2 and Requirement 3 from a perspective of the control device 400.

The control device 400 as a central element controls the RAN by causing each base station 70 as a distributed element to control itself in accordance with the policy. Thus, the system 16 satisfies Requirement 2 because the control device 400 as a single entity can control the entirety of the RAN.

However, the control device 400 controls the RAN by causing the base station 70 to control itself by transmitting, to the base station 70, a policy that can be transmitted at a time interval of about 1 s. Thus, the system 14 does not satisfy Requirement 3 because the control device 400 can generate a policy only at the time interval of about 1 s.

As a result of above, the system 16 does not satisfy all of Requirement 1 to Requirement 4 at a same time. Refer to Fig. 4, which shows a table summarizing whether or not the system 16 satisfies each requirement of Requirement 1 to Requirement 4.

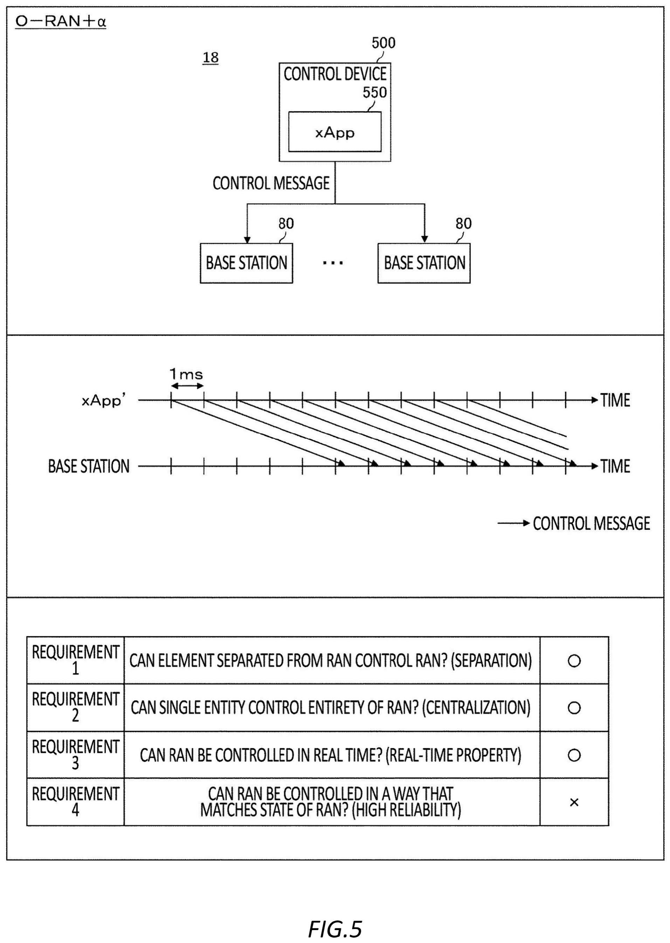

Fig. 5 is an explanatory diagram for explaining an example of a case where a system 18 controls the RAN. As shown in Fig. 5, the system 18 includes a control device 500 and a plurality of base stations 80.

The control device 500 may execute various functions by executing an xApp 550. For example, the control device 500 predicts a state of the RAN at a prediction timing after elapse of a transmission time from a generation start timing at which generation of a control message for controlling the base station 80 is started until data arrives at the base station 80 from the control device 500, and generates the control message based on the state of the RAN predicted. The control device 500 transmits the control message generated to the base station 80.

The base station 80 receives the control message from the control device 500. The base station 80 controls itself in accordance with the control message received.

As shown in Fig. 5, the control device 500 generates a control message at a time interval of about 1 ms and transmits the control message generated to the base station 80, by executing the xApp 550. The base station 80 controls itself in accordance with the control message received from the control device 500.

According to the system 18, the control device 500 controls the RAN by causing each base station 80 arranged in the RAN to control itself in accordance with the control message. Thus, the system 18 satisfies Requirement 1 because the control device 500 as an element separated from the RAN can control the RAN.

According to the system 18, the control device 500 as a central element controls the RAN by causing each base station 80 as a distributed element to control itself in accordance with the control message. Thus, the system 18 satisfies Requirement 2 because the control device 500 as a single entity can control the entirety of the RAN.

According to the system 18, the control device 500 controls the RAN by causing each base station 80 to control itself by transmitting, to each base station 80, a control message that can be generated at a time interval of about 1 ms. Thus, the system 18 satisfies Requirement 3 because the control device 500 can generate a control message for each base station 80 at the time interval of about 1 ms.

However, according to the system 18, the control device 500 controls the RAN by causing each base station 80 to control itself in accordance with the control message generated based on a prediction result obtained by predicting a state of the RAN at a prediction timing. The state of the RAN at the prediction timing, which is predicted by the control device 500, may be different from an actual state of the RAN at a reception timing when the base station 80 receives the control message from the control device 500. This means that the control message may not match the actual state of the RAN at the reception timing. However, each base station 80 cannot determine whether or not the control message received from the control device 500 matches the actual state of the RAN at the reception timing. Thus, the system 18 does not satisfy Requirement 4 because the control message transmitted by the control device 500 to each base station 80 may not match the actual state of the RAN at the reception timing and each base station 80 cannot determine whether or not the control message matches the actual state of the RAN at the reception timing.

As a result of above, the system 18 satisfies requirements of Requirement 1, Requirement 2, and Requirement 3, but does not satisfy Requirement 4. Refer to Fig. 5, which shows a table summarizing whether or not the system 18 satisfies each requirement of Requirement 1 to Requirement 4.

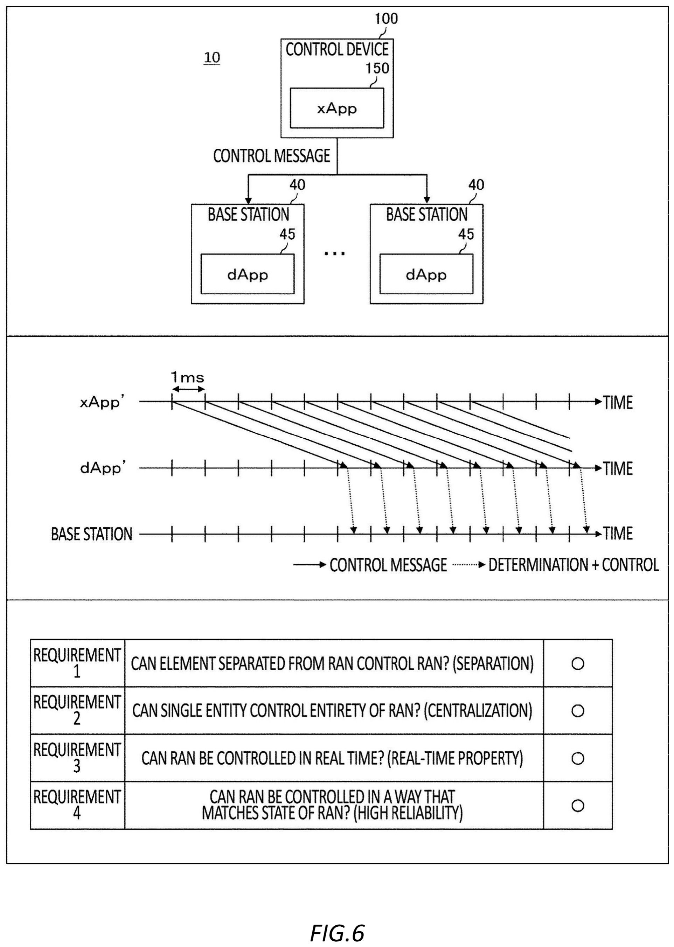

Fig. 6 is an explanatory diagram for explaining an example of a case where the system 10 controls the RAN. The configuration of the system 10 is not described here because it is previously described in the description of Fig. 1.

The control device 100 may execute various functions by executing an xApp 150. For example, the control device 100 predicts a state of the RAN at a prediction timing after elapse of a transmission time from a generation start timing at which generation of a control message for controlling the base station 40 is started until data arrives at the base station 40 from the control device 100, and generates the control message based on the predicted state of the RAN at the prediction timing. The control device 100 transmits the control message generated to the base station 40.

The timings may have a temporal width before and after a reference time. For example, the generation start timing may have a temporal width before and after the generation start time at which the control device 100 actually starts generation of the control message.

The base station 40 may execute various functions by executing a dApp 45. For example, the base station 40 receives the control message from the control device 100. Next, the base station 40 acquires an actual state of the RAN at a reception timing at which the control message is received from the control device 100. Thereafter, the base station 40 executes processing related to control of itself based on the control message received and the actual state of the RAN acquired. The dApp 45 may be an example of the control unit.

For example, the base station 40 determines whether or not the control message matches the actual state of the RAN at the reception timing. Thereafter, the base station 40 may control itself in accordance with a determination result. For example, when the control message matches the actual state of the RAN at the reception timing, the base station 40 controls itself in accordance with the control message received from the control device 100. When the control message does not match the actual state of the RAN at the reception timing, the base station 40 may decide a control content of itself so as to match the actual state of the RAN at the reception timing and control itself in accordance with a control content decided. In addition, when the control message does not match the actual state of the RAN at the reception timing, the base station 40 may modify the control message so as to match the actual state of the RAN at the reception timing and control itself in accordance with the control message modified.

As shown in Fig. 6, the control device 100 generates a control message at a time interval of about 1 ms and transmits the control message generated to the base station 40, by executing the xApp 150. The base station 40 determines whether or not the control message received from the control device 100 matches the actual state of the RAN at a reception timing and controls itself in accordance with a determination result, by executing the dApp 45.

According to the system 10 according to the present embodiment, the control device 100 controls the RAN by causing each base station 40 arranged in the RAN to control itself based on the control message. Thus, the system 10 according to the present embodiment satisfies Requirement 1 because the control device 100 as an element separated from the RAN can control the RAN.

According to the system 10 according to the present embodiment, the control device 100 as a central element controls the RAN by causing each base station 40 as a distributed element to control itself based on the control message. Thus, the system 10 according to the present embodiment satisfies Requirement 2 because the control device 100 as a single entity can control the entirety of the RAN.

According to the system 10 according to the present embodiment, the control device 100 controls the RAN by causing each base station 40 to control itself by transmitting, to each base station 40, a control message that can be generated at a time interval of about 1 ms. Thus, the system 10 according to the present embodiment satisfies Requirement 3 because the control device 100 can generate a control message for each base station 40 at the time interval of about 1 ms.

Further, according to the system 10 according to the present embodiment, each base station 40 determines whether or not the control message received from the control device 100 matches an actual state of the RAN at a reception timing and controls itself in accordance with a determination result. In this way, even when the control message does not match the actual state of the RAN at the reception timing, each base station 40 can control itself so as to match the actual state of the RAN at the reception timing by deciding a control content of itself or by modifying the control message. Thus, the system 10 according to the present embodiment satisfies Requirement 4.

As a result of above, the system 10 according to the present embodiment satisfies all of Requirement 1 to Requirement 4 at a same time. Therefore, the system 10 according to the present embodiment can achieve high-performance control of the RAN. Refer to Fig. 6, which shows a table summarizing whether or not the system 10 according to the present embodiment satisfies each requirement of Requirement 1 to Requirement 4.

Similarly to the control device 100, the control device 500 shown in Fig. 5 predicts a state of the RAN at a prediction timing, generates a control message based on the state of the RAN predicted, and transmits the control message generated to each base station 80. Therefore, the control device 500 is included in an aspect of the control device according to the present invention.

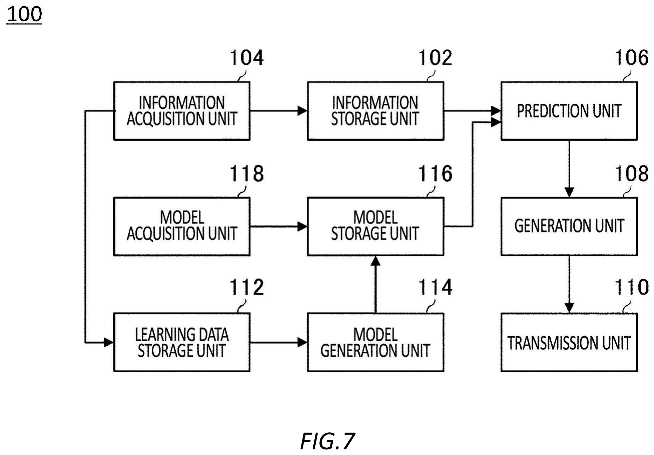

Fig. 7 schematically illustrates an example of a functional configuration of a control device 100. The control device 100 may include an information storage unit 102, an information acquisition unit 104, a prediction unit 106, a generation unit 108, a transmission unit 110, a learning data storage unit 112, a model generation unit 114, a model storage unit 116, and a model acquisition unit 118. The control device 100 does not necessarily include all of these configurations.

The information storage unit 102 stores various types of information. For example, the information storage unit 102 stores base station information indicating the plurality of base stations 40 arranged in the RAN. For example, the base station information includes installation position information indicating an installation position of the base station 40. The base station information includes performance information indicating a performance of the base station 40. The base station information may include any other information about the base station 40.

The information acquisition unit 104 acquires various types of information. For example, the information acquisition unit 104 acquires various types of information by receiving various types of information from an external device such as the base station 40. The information acquisition unit 104 acquires various types of information by receiving an input from a user of the control device 100 at an input unit of the control device 100. For example, the user of the control device 100 is an administrator of the RAN. The information acquisition unit 104 may store the acquired various types of information in the information storage unit 102.

The information acquisition unit 104 acquires a state of the RAN. The information acquisition unit 104 may store the state of the RAN acquired as RAN state information in the information storage unit 102.

For example, the state of the RAN includes a state of at least one base station 40 arranged in the RAN. For example, the state of the RAN includes states of all base stations 40 arranged in the RAN.

For example, the state of the base station 40 includes a state of a radio resource allocated to the communication terminal 200 by the base station 40. For example, the radio resource is allocated to the communication terminal 200 in a unit of a resource block.

For example, the state of the base station 40 includes a state of a channel formed between the base station 40 and the communication terminal 200. For example, the state of the channel includes a state of a fade amount of a signal when the signal is transmitted between the base station 40 and the communication terminal 200 through the channel. The state of the channel may include a state of a phase rotation amount of the signal when the signal is transmitted between the base station 40 and the communication terminal 200 through the channel.

For example, the state of the base station 40 includes a state of a traffic volume of communication between the base station 40 and the communication terminal 200. For example, the state of the traffic volume of communication between the base station 40 and the communication terminal 200 includes a state of a total traffic volume as a sum of traffic volumes of each communication between the base station 40 and each of the plurality of communication terminals 200. The state of the traffic volume of communication between the base station 40 and the communication terminal 200 may include a state of an average traffic volume as an average of traffic volumes of each communication between the base station 40 and each of the plurality of communication terminals 200.

For example, the state of the base station 40 includes a state of a beam output by an antenna mounted on the base station 40. For example, the state of the beam includes a state of an output power of the beam. For example, the state of the beam includes a state of an output direction of the beam. For example, the state of the beam includes a state of a frequency of the beam. The state of the beam may include a state of a phase of the beam.

The state of the base station 40 may include a state of processing load of the base station 40. For example, the state of the processing load of the base station 40 includes a state of a utilization of a processor mounted on the base station 40. For example, the state of the processing load of the base station 40 includes a state of a utilization of a memory mounted on the base station 40. The state of the processing load of the base station 40 may include a state of a utilization of any other component used for controlling the various functions of the base station 40.

For example, the state of the RAN includes a state of the communication terminal 200. For example, the state of the communication terminal 200 includes a state of Quality of Service (QoS) required by the communication terminal 200. For example, the state of the communication terminal 200 includes a state of delay allowed by the communication terminal 200. The state of the communication terminal 200 includes a state of jitter allowed by the communication terminal 200. The state of the communication terminal 200 may include a state of a packet loss rate allowed by the communication terminal 200.

The state of the RAN may include a state of weather in an area within a predetermined range including the installation position of the base station 40 arranged in the RAN. The state of the RAN may include a state of a people flow in the area.

The prediction unit 106 predicts a state of the RAN in which the plurality of base stations 40 are arranged. For example, the prediction unit 106 predicts a state of the RAN at a prediction timing.

For example, the prediction unit 106 periodically predicts the state of the RAN. For example, the prediction unit 106 predicts the state of the RAN at a time interval of 1 ms. The prediction unit 106 may predict the state of the RAN at any other time interval.

For example, the prediction unit 106 predicts the state of the RAN based on RAN state information stored in the information storage unit 102. For example, the prediction unit 106 predicts the state of the RAN based on RAN state information where an elapsed time until a generation start timing is shorter than a predetermined elapsed time. For example, the predetermined elapsed time is 10 s.

For example, the prediction unit 106 predicts the state of the RAN by predicting a state of a traffic volume of communication between the base station 40 and the communication terminal 200. For example, the prediction unit 106 predicts the state of the traffic volume by predicting a transition of the traffic volume based on the traffic volume where an elapsed time until a start timing is shorter than a predetermined time.

For example, the prediction unit 106 predicts the state of the RAN by predicting a channel state for a channel formed between the base station 40 and the communication terminal 200. For example, the prediction unit 106 predicts the channel state by executing channel estimation.

For example, the prediction unit 106 predicts the state of the RAN by predicting a state of a beam output by an antenna mounted on the base station 40. For example, the prediction unit 106 predicts the state of the beam by predicting a propagating property of a radio wave in a wireless communication area formed by the base station 40.

The prediction unit 106 may predict the state of the RAN by predicting a state of processing load of the base station 40. For example, the prediction unit 106 predicts the state of the processing load of the base station 40 by predicting transition of the processing load of the base station 40 based on processing load of the base station 40 where an elapsed time until a start timing is shorter than a predetermined time.

The generation unit 108 generates information for controlling the base station 40 to be controlled. The generation unit 108 generates, for example, a control message. For example, the generation unit 108 generates the control message based on a state of the RAN at a prediction timing predicted by the prediction unit 106. The generation unit 108 may generate the control message based on the state of the RAN at an acquisition timing at which the information acquisition unit 104 acquires the state of the RAN.

For example, the control message includes radio resource information indicating a radio resource to be allocated to the communication terminal 200. For example, the radio resource information includes a resource block indicating a resource block to be allocated to the communication terminal 200. For example, the control message includes antenna control information for controlling an antenna mounted on the base station 40. For example, the antenna control information includes output power control information for controlling an output power of a beam output by the antenna. For example, the antenna control information includes output direction control information for controlling an output direction of the beam output by the antenna. For example, the antenna control information includes frequency control information for controlling a state of a frequency of the beam output by the antenna. The antenna control information may include phase control information for controlling a phase of the beam output by the antenna. The control message may include a prediction result obtained by the prediction unit 106 predicting the state of the RAN.

For example, the generation unit 108 generates the control message so as to ensure QoS required by the communication terminal 200. For example, the generation unit 108 generates the control message so as to maximize a spectral efficiency as a total volume of data that can be transmitted over a bandwidth allocated to the RAN. The generation unit 108 may generate the control message so that the base station 40 executes beamforming by using an antenna mounted on the base station 40.

The generation unit 108 may have a function of generating a policy. In this case, the generation unit 108 may generate the policy in a way that is similar to the case where the control device 300 or the control device 400 generates the policy.

The transmission unit 110 transmits the control message generated by the generation unit 108 to the base station 40 to be controlled. For example, the transmission unit 110 transmits the control message to the base station 40 through the core network 20. For example, the transmission unit 110 transmits the control message to the base station 40 through the E2 interface defined by O-RAN Alliance.

The learning data storage unit 112 stores learning data. For example, the learning data includes RAN state information acquired by the information acquisition unit 104 at a reference timing and a plurality of pieces of RAN state information acquired by the information acquisition unit 104 where an elapsed time until a reference timing is shorter than a predetermined elapsed time.

The model generation unit 114 generates, by machine learning, an estimation model for estimating a state of the RAN at a prediction timing. For example, the model generation unit 114 generates, by machine learning, the estimation model for estimating the state of the RAN at the prediction timing from the plurality of pieces of RAN state information acquired by the information acquisition unit 104 where the elapsed time period until the prediction timing is shorter than the predetermined elapsed time, using a plurality of learning data stored in the learning data storage unit 112 as training data. The model generation unit 114 may store the generated estimation model in the model storage unit 116.

The model acquisition unit 118 acquires an estimation model for estimating the state of the RAN at the prediction timing. For example, the model acquisition unit 118 acquires a model similar to the estimation model generated by the model generation unit 114. The model acquisition unit 118 may store the acquired estimation model in the model storage unit 116.

The prediction unit 106 may predict the state of the RAN by using the estimation model stored in the model storage unit 116. For example, the prediction unit 106 predicts, by using the estimation model, the state of the RAN at the prediction timing from plurality of pieces of RAN state information acquired by the information acquisition unit 104 where the elapsed time period until the prediction timing is shorter than the predetermined elapsed time.

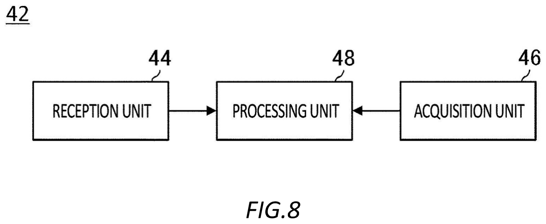

Fig. 8 schematically illustrates an example of a functional configuration of a control unit 42. The control unit 42 is mounted on one base station 40 among the plurality of base stations 40 arranged in the RAN and controls the one base station 40. The control unit 42 may be implemented as hardware such as a CPU or may be implemented as software such as the dApp 45. The control unit 42 may include a reception unit 44, an acquisition unit 46, and a processing unit 48. The control unit 42 does not necessarily include all of these configurations.

The reception unit 44 receives various types of information. For example, the reception unit 44 receives, from the control device 100, a control message for controlling one base station 40 on which the control unit 42 is mounted. For example, the reception unit 44 receives the control message from the control device 100 through the core network 20. For example, the reception unit 44 receives the control message from the control device 100 through the E2 interface.

The acquisition unit 46 acquires a state of the RAN. For example, the acquisition unit 46 acquires a state of the RAN at a reception timing.

For example, the acquisition unit 46 acquires the state of the RAN by acquiring a state of one base station 40 on which the control unit 42 is mounted. The acquisition unit 46 may acquire the state of the RAN by further acquiring a state of another base station 40 different from the one base station 40 among the plurality of base stations 40 arranged in the RAN. For example, the acquisition unit 46 acquires a RAN state of the another base station 40 by receiving RAN state information of the another base station 40 from the another base station 40. The acquisition unit 46 may acquire the RAN state of the another base station 40 by receiving RAN state information of the another base station 40 from the control device 100.

The processing unit 48 executes processing related to control of one base station 40 on which the control unit 42 is mounted. For example, the processing unit 48 executes processing related to control of the one base station 40 based on the control message received by the reception unit 44 and the state of the RAN acquired by the acquisition unit 46 at the reception timing.

For example, the processing unit 48 determines whether or not the control message matches the state of the RAN acquired by the acquisition unit 46 at the reception timing. For example, the processing unit 48 determines whether or not the control message matches the state of the RAN acquired by the acquisition unit 46 at the reception timing by determining whether or not processing of allocating, to the communication terminal 200, a radio resource indicated by the radio resource information included in the control message matches the state of the RAN acquired by the acquisition unit 46 at the reception timing. For example, the processing unit 48 determines whether or not the control message matches the state of the RAN acquired by the acquisition unit 46 at the reception timing by determining whether or not processing of beamforming by using an antenna mounted on the one base station 40 in accordance with antenna control information included in the control message matches the state of the RAN acquired by the acquisition unit 46 at the reception timing.

The processing unit 48 may determine whether or not the control message matches the state of the RAN acquired by the acquisition unit 46 at the reception timing by collating a state of the RAN predicted by the control device 100 at a prediction timing indicated by a prediction result included in the control message and the state of the RAN acquired by the acquisition unit 46 at the reception timing. For example, when a total traffic volume error between a total traffic volume predicted by the control device 100 at a prediction timing and a total traffic volume acquired by the acquisition unit 46 at a reception timing is smaller than a predetermined total traffic volume error threshold, the processing unit 48 determines that the control message matches the state of the RAN acquired by the acquisition unit 46 at the reception timing. When the total traffic volume error is larger than the total traffic volume error threshold, the processing unit 48 determines that the control message does not match the state of the RAN acquired by the acquisition unit 46 at the reception timing. For example, when an average traffic volume error between an average traffic volume predicted by the control device 100 at a prediction timing and an average traffic volume acquired by the acquisition unit 46 at a reception timing is smaller than a predetermined average traffic volume error threshold, the processing unit 48 determines that the control message matches the state of the RAN acquired by the acquisition unit 46 at the reception timing. When the average traffic volume error is larger than the average traffic volume error threshold, the processing unit 48 determines that the control message does not match the state of the RAN acquired by the acquisition unit 46 at the reception timing.

For example, when a processor utilization error between a utilization of a processor mounted on the one base station 40 predicted by the control device 100 at a prediction timing and a utilization of the processor mounted on the one base station 40 acquired by the acquisition unit 46 at a reception timing is smaller than a predetermined processor utilization error threshold, the processing unit 48 determines that the control message matches the state of the RAN acquired by the acquisition unit 46 at the reception timing. When the processor utilization error is larger than the processor utilization error threshold, the processing unit 48 determines that the control message does not match the state of the RAN acquired by the acquisition unit 46 at the reception timing. For example, when a memory utilization error between a utilization of a memory mounted on the one base station 40 predicted by the control device 100 at a prediction timing and a utilization of the memory mounted on the one base station 40 acquired by the acquisition unit 46 at a reception timing is smaller than a predetermined memory utilization error threshold, the processing unit 48 determines that the control message matches the state of the RAN acquired by the acquisition unit 46 at the reception timing. When the memory utilization error is larger than the memory utilization error threshold, the processing unit 48 determines that the control message does not match the state of the RAN acquired by the acquisition unit 46 at the reception timing.

For example, the processing unit 48 determines whether or not the control message matches the state of the RAN acquired by the acquisition unit 46 at the reception timing by determining whether or not a problem will occur with a function of the RAN if processing of controlling the one base station 40 is executed in accordance with the control message in the state of the RAN acquired by the acquisition unit 46 at the reception timing. In this case, the processing unit 48 may determine, when the processing unit 48 determines that no problem will occur in the function of the RAN, that the control message matches the state of the RAN acquired by the acquisition unit 46 at the reception timing and may determine, when the processing unit 48 determines that a problem will occur with a function of the RAN, that the control message does not match the state of the RAN acquired by the acquisition unit 46 at the reception timing.

For example, when the processing unit determines that a communication terminal 200 will occur for which QoS cannot be ensured if the one base station 40 is controlled in accordance with the control message, the processing unit 48 determines that a problem will occur with a function of the RAN. For example, when the processing unit 48 determines that a spectral efficiency of the RAN will fall below an allowed lower limit value if the one base station 40 is controlled in accordance with the control message, the processing unit 48 determines that a problem will occur with a function of the RAN. For example, when the processing unit 48 determines that a network congestion will occur in the RAN if the one base station 40 is controlled in accordance with the control message, the processing unit 48 determines that a problem will occur with a function of the RAN. For example, when the processing unit 48 determines that an interference will occur between a beam output by an antenna mounted on the one base station 40 and another beam if the one base station 40 is controlled in accordance with the control message, the processing unit 48 determines that a problem will occur with a function of the RAN. For example, when the processing unit 48 determines that processing load of the one base station 40 will exceed an upper limit value if the one base station 40 is controlled in accordance with the control message, the processing unit 48 determines that a problem will occur with a function of the RAN.

When the processing unit 48 determines that a function of the RAN will fail if the one base station 40 is controlled in accordance with the control message, the processing unit 48 may determine that a problem will occur with a function of the RAN. For example, when the processing unit 48 determines that a wireless communication connection is disconnected between more communication terminals 200 than a predetermined number and the one base station 40 if the one base station 40 is controlled in accordance with the control message, the processing unit 48 determines that a function of the RAN will fail. For example, when the processing unit 48 determines that a ratio of communication terminals 200 for which a wireless communication connection to the one base station 40 is disconnected to a total number of communication terminals 200 in a wireless communication area formed by the one base station 40 will be higher than a predetermined ratio if the one base station 40 is controlled in accordance with the control message, the processing unit 48 determines that a function of the RAN will fail. For example, when the processing unit 48 determines that, if the one base station 40 is controlled in accordance with the control message, there will be a processing operation having a processing volume that exceeds a processing capacity of the one base station 40 and, as a result, a process delay, which occurs when the one base station 40 processes the processing operation, will be longer than a predetermined allowed process delay, the processing unit 48 determines that a function of the RAN will fail. When the processing unit 48 determines a component such as a processor or a memory mounted on the one base station 40 will go into thermal runaway if the one base station 40 is controlled in accordance with the control message, the processing unit 48 may determine that a function of the RAN will fail.

For example, when the processing unit 48 determines that the control message matches the state of the RAN acquired by the acquisition unit 46 at the reception timing, the processing unit 48 controls the one base station 40 in accordance with the control message. When the processing unit 48 determines that the control message does not match the state of the RAN acquired by the acquisition unit 46 at the reception timing, the processing unit 48 rejects controlling the one base station 40 in accordance with the control message.

For example, when the processing unit 48 rejects controlling the one base station 40 in accordance with the control message, the processing unit 48 decides a control content of the one base station 40 so as to match the state of the RAN acquired by the acquisition unit 46 at the reception timing and controls the one base station 40 in accordance with the control content decided. In this case, the processing unit 48 may abandon the control message.

For example, the processing unit 48 decides the control content of the one base station 40 such that no problem will occur with a function of the RAN. For example, the processing unit 48 decides the control content of the one base station 40 such that there will be no communication terminal 200 for which QoS cannot be ensured. For example, the processing unit 48 decides the control content of the one base station 40 such that a spectral efficiency of the RAN will not fall below an allowed lower limit value. The processing unit 48 decides the control content of the one base station 40 such that a network congestion will not occur in the RAN. The processing unit 48 decides the control content of the one base station 40 such that no interference will occur between a beam output by an antenna mounted on the one base station 40 and another beam. The processing unit 48 may decide the control content of the one base station 40 such that processing load of the one base station 40 will not exceed an upper limit value.

The processing unit 48 may decide the control content of the one base station 40 so that a function of the RAN will not fail. For example, the processing unit 48 decides the control content of the one base station 40 such that a wireless communication connection will not be disconnected between more communication terminals 200 than a predetermined number and the one base station 40. For example, the processing unit 48 decides the control content of the one base station 40 such that a ratio of communication terminals 200 for which a wireless communication connection to the one base station 40 is disconnected to a total number of communication terminals 200 in a wireless communication area formed by the one base station 40 will not be higher than a predetermined ratio. For example, the processing unit 48 decides the control content of the one base station 40 such that a processing volume of a processing operation by the one base station 40 will not exceed a processing capacity of the one base station 40. In this case, the processing unit 48 may offload a processing operation that will not be processed at the one base station 40 to another base station 40 arranged in the RAN. The processing unit 48 may decide the control content of the one base station 40 such that a component such as a processor or a memory mounted on the one base station 40 will not go into thermal runaway.

When the processing unit 48 rejects controlling the one base station 40 in accordance with the control message, the processing unit 48 may modify the control message so as to match a state of the RAN acquired by the acquisition unit 46 at the reception timing. In this case, the processing unit 48 may control the one base station 40 in accordance with the control message modified.

For example, the processing unit 48 modifies the control message such that no problem will occur with a function of the RAN. For example, the processing unit 48 modifies the control message such that there will be no communication terminal 200 for which QoS cannot be ensured. For example, the processing unit 48 modifies the control message such that a spectral efficiency of the RAN will not fall below an allowed lower limit value. The processing unit 48 modifies the control message such that a network congestion will not occur in the RAN. The processing unit 48 modifies the control message such that no interference will occur between a beam output by an antenna mounted on the one base station 40 and another beam. The processing unit 48 may modify the control message such that processing load of the one base station 40 will not exceed an upper limit value.

The processing unit 48 may modify the control message such that a function of the RAN will not fail. For example, the processing unit 48 modifies the control message such that a wireless communication connection between more communication terminals 200 than a predetermined number and the one base station 40 will not be disconnected. For example, the processing unit 48 modifies the control message such that a ratio of communication terminals 200 for which a wireless communication connection to the one base station 40 is disconnected to a total number of communication terminals 200 in a wireless communication area formed by the one base station 40 will not be higher than a predetermined ratio. For example, the processing unit 48 modifies the control message such that a processing volume of a processing operation by the one base station 40 will not exceed a processing capacity of the one base station 40. In this case, the processing unit 48 may offload a processing operation that will not be processed at the one base station 40 to another base station 40 arranged in the RAN. The processing unit 48 may modify the control message so that components such as a processor or a memory mounted on the one base station 40 will not go into thermal runaway.

When the processing unit 48 rejects controlling the one base station 40 in accordance with the control message, the processing unit 48 may not control the one base station 40 provided that no problem will occur with a function of the RAN. When the processing unit 48 rejects controlling the one base station 40 in accordance with the control message, the processing unit 48 may not control the one base station 40 provided that a function of the RAN will not fail.

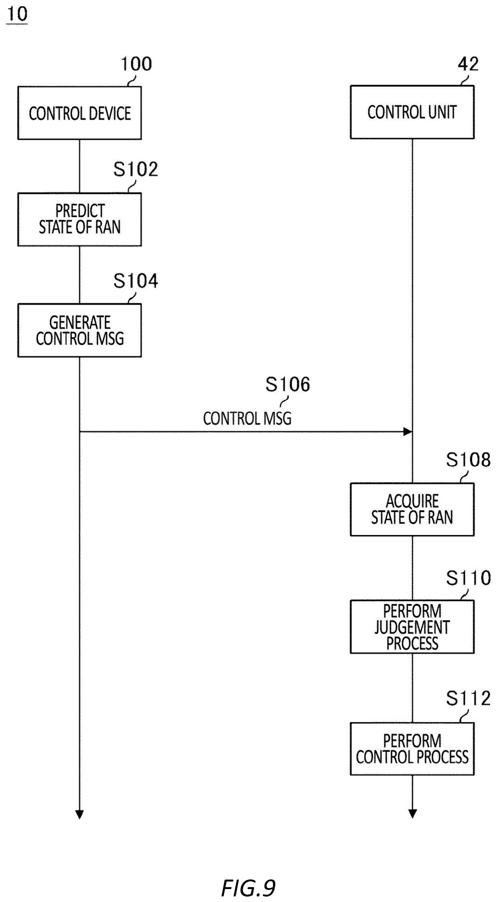

Fig. 9 is an explanatory diagram for explaining an example of a processing flow of the system 10. Described here, as a starting state, is a state where the control device 100 is yet to predict a state of the RAN.

At Step, which may be abbreviated to S, 102, the prediction unit 106 predicts a state of the RAN at a prediction timing. At S104, the generation unit 108 generates a control message based on the state of the RAN predicted by the prediction unit 106 at S102. At S106, the transmission unit 110 transmits, through an E2 interface, the control message generated by the generation unit 108 at S104 to the base station 40 on which the control unit 42 is mounted.

At S108, the acquisition unit 46 acquires a state of the RAN at a reception timing at which the reception unit 44 receives the control message through the E2 interface from the control device 100 at S106. At S110, the processing unit 48 executes a determination process for determining whether or not the control message matches the state of the RAN acquired by the acquisition unit 46 at S108, based on the control message received by the reception unit 44 at S106 and the state of the RAN acquired by the acquisition unit 46 at S108. At S112, the processing unit 48 executes a control process for controlling the base station 40 on which the control unit 42 is mounted, based on a determination result of the determination processes of S110.

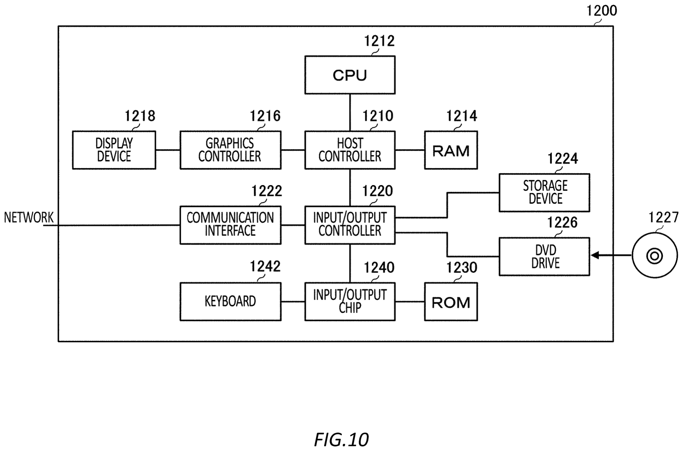

Fig. 10 schematically illustrates an example of a hardware configuration of a computer 1200 which functions as the control device 100 or the control unit 42. Programs installed in the computer 1200 can cause the computer 1200 to function as one or more "units" of the device according to the above-described embodiment or can cause the computer 1200 to execute operations associated with the devices according to the above-described embodiment or said one or more "units", and/or can cause the computer 1200 to execute a process according to the above-described embodiment or steps of said process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes a communication interface 1222, a storage device 1224, a DVD drive 1226, and an input/output unit such as an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 also includes legacy input/output units such as a ROM 1230 and a keyboard 1242, which are connected to the input/output controller 1220 through an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive 1226 reads the programs or the data from the DVD-ROM 1227 or the like, and provides the storage device 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM 1227 or the IC card. The program is read from the computer-readable storage medium, installed into the storage device 1224, RAM 1214, or ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM 1227, or the IC card, and transmits the read transmission data to a network or writes reception data received from a network to a reception buffer region or the like provided on the recording medium.

In addition, the CPU 1212 may cause all or a necessary portion of a file or a database, which has been stored in an external recording medium such as the storage device 1224, the DVD drive 1226 (DVD-ROM 1227), the IC card and the like, to be read into the RAM 1214, thereby executing various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby acquiring the attribute value of the second attribute associated with the first attribute that satisfies a predetermined condition.

The programs or software module described above may be stored on the computer 1200 or in a computer-readable storage medium near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are executed or "units" of apparatuses responsible for executing operations. A specific step and "unit" may be implemented by a dedicated circuit, a programmable circuit supplied along with a computer-readable instruction stored on a computer-readable storage medium, and/or a processor supplied along with the computer-readable instruction stored on the computer-readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer-readable storage medium may include any tangible device capable of storing an instruction executed by an appropriate device, so that the computer-readable storage medium having the instruction stored thereon constitutes a product including an instruction that may be executed in order to provide means for executing an operation designated by a flowchart or a block diagram. An example of the computer-readable storage medium may include an electronic storage medium, a magnetic storage medium, an optical storage medium, an electromagnetic storage medium, a semiconductor storage medium, etc. A more specific example of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of a source code or an object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer-readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer-readable instruction to generate means for executing operations designated by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the present invention.

The operations, procedures, steps, and stages of each process executed by a device, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

10: system, 12: system, 14: system, 16: system, 18: system, 20: core network, 40: base station, 42: control unit, 44: reception unit, 45: dApp, 46: acquisition unit, 48: processing unit, 50: base station, 60: base station, 70: base station, 75: dApp, 80: base station, 100: control device, 102: information storage unit, 104: information acquisition unit, 106: prediction unit, 108: generation unit, 110: transmission unit, 112: learning data storage unit, 114: model generation unit, 116: model storage unit, 118: model acquisition unit, 150: xApp, 200: communication terminal, 300: control device, 350: xApp, 400: control device, 450: xApp, 500: control device, 550: xApp, 1200: computer, 1210: host controller, 1212: CPU, 1214: RAM, 1216: graphics controller, 1218: display device, 1220: input/output controller, 1222: communication interface, 1224: storage device, 1226: DVD drive, 1227: DVD-ROM, 1230: ROM, 1240: input/output chip, 1242: keyboard.

## Claims

1. A control system comprising:
a control device which controls a plurality of base stations arranged in a Radio Access Network (RAN); and
a control unit which is mounted on one base station among the plurality of base stations and which controls the one base station,
wherein the control device includes
a prediction unit which predicts a state of the RAN at a prediction timing after elapse of a transmission time from a generation start timing at which generation of a control message for controlling the one base station is started until data arrives at the one base station from the control device,
a generation unit which generates the control message based on the state of the RAN predicted by the prediction unit, and
a transmission unit which transmits the control message to the one base station, and
wherein the control unit includes
a reception unit which receives the control message from the control device,
an acquisition unit which acquires a state of the RAN at a reception timing at which the reception unit receives the control message, and
a processing unit which executes processing related to control of the one base station based on the control message and the state of the RAN acquired by the acquisition unit.

2. The control system according to Claim 1, wherein
the processing unit determines whether or not the control message matches the state of the RAN acquired by the acquisition unit and, when the processing unit determines that the control message matches the state of the RAN acquired by the acquisition unit, executes processing of controlling the one base station in accordance with the control message.

3. The control system according to Claim 2, wherein, when the processing unit determines that the control message does not match the state of the RAN acquired by the acquisition unit, the processing unit decides a control content for the one base station so as to match the state of the RAN acquired by the acquisition unit and executes processing of controlling the one base station in accordance with a control content decided.

4. The control system according to Claim 2, wherein, when the processing unit determines that the control message does not match the state of the RAN acquired by the acquisition unit, the processing unit modifies the control message so as to match the state of the RAN acquired by the acquisition unit and executes processing of controlling the one base station in accordance with the control message modified.

5. The control system according to any one of Claims 2 to 4, wherein the processing unit determines whether or not the control message matches the state of the RAN acquired by the acquisition unit by determining whether or not a problem will occur with a function of the RAN if the processing unit executes processing of controlling the one base station in accordance with the control message in the state of the RAN acquired by the acquisition unit.

6. The control system according to any one of Claims 2 to 4, wherein
the generation unit generates the control message including a prediction result obtained by the prediction unit predicting the state of the RAN, and
the processing unit determines whether or not the control message matches the state of the RAN acquired by the acquisition unit by collating the state of the RAN indicated by the prediction result included in the control message and the state of the RAN acquired by the acquisition unit.

7. The control system according to any one of Claims 2 to 4, wherein
the generation unit generates the control message including radio resource information indicating a radio resource to be allocated to a communication terminal in a wireless communication area formed by the one base station, and
the processing unit determines whether or not the control message matches the state of the RAN acquired by the acquisition unit by determining whether or not processing of allocating the radio resource indicated by the radio resource information included in the control message to the communication terminal matches the state of the RAN acquired by the acquisition unit.

8. A control device which controls a plurality of base stations arranged in a RAN, comprising:
a prediction unit which predicts a state of the RAN at a prediction timing after elapse of a transmission time from a generation start timing at which generation of a control message for controlling one base station among the plurality of base stations is started until data arrives at the one base station from the control device;
a generation unit which generates the control message based on the state of the RAN predicted by the prediction unit; and
a transmission unit which transmits the control message to the one base station.

9. A program which causes a computer to function as the control device according to Claim 8.

10. A control unit which is mounted on one base station among a plurality of base stations arranged in a RAN and which controls the one base station, comprising:
a reception unit which receives a control message for controlling the one base station from a control device which controls the plurality of base stations, wherein the control message is generated based on a state of the RAN predicted by the control device at a prediction timing after elapse of a transmission time from a generation start timing at which the control device starts generation of the control message until data arrives at the one base station from the control device;
an acquisition unit which acquires a state of the RAN at a reception timing at which the reception unit receives the control message; and
a processing unit which executes processing related to control of the one base station based on the control message and the state of the RAN acquired by the acquisition unit.

11. The control unit according to Claim 10, wherein
the processing unit determines whether or not the control message matches the state of the RAN acquired by the acquisition unit and, when the processing unit determines that the control message matches the state of the RAN acquired by the acquisition unit, executes processing of controlling the one base station in accordance with the control message.

12. A program which causes a computer to function as the control unit according to Claim 10 or 11.
